Europäisches Patentamt

European Patent Office

Office européen des brevets

(19)

(11) Veröffentlichungsnummer: **0 245 589**

**A2**

(12) # EUROPÄISCHE PATENTANMELDUNG

(21) Anmeldenummer: **87102291.9**

(22) Anmeldetag: **18.02.87**

(51) Int. Cl.³: **F 16 L 59/16**

(30) Priorität: **18.02.86 DE 3605039**

(43) Veröffentlichungstag der Anmeldung:
**19.11.87 Patentblatt 87/47**

(84) Benannte Vertragsstaaten:
**AT BE CH FR GB LI LU NL SE**

(71) Anmelder: **Zay, Bruno Dipl.-Ing.**
**Bellscheiderweg 38**
**D-4030 Ratingen 6(DE)**

(72) Erfinder: **Zay, Bruno Dipl.-Ing.**
**Bellscheiderweg 38**
**D-4030 Ratingen 6(DE)**

(74) Vertreter: **Krieger, Hans Jochen, Dr.**
**Gogrevestrasse 11-13 Postfach 6808**
**D-4000 Düsseldorf 1(DE)**

(54) **Verfahren zur Herstellung von Kunststoffmantelrohrsystemen mit Stahlmantelbogen.**

(57) Die Erfindung betrifft ein Verfahren zur Herstellung von Rohrleitungen für heiße Medien und unterirdische Verlegung, insbesondere von Fernwärmeleitungen, wobei die Rohrdehnungen durch Erwärmung durch das Medium dadurch aufgefangen werden, daß Richtungsänderungen rechtwinkelig erfolgen und die Bogenstücke als Stahlmantelbogenstücke ausgebildet sind, die die Restdehnungskräfte über diesen Stahlmantelbogen auf das verdichtete Erdreich übertragen.

EP 0 245 589 A2

Croydon Printing Company Ltd.

**Rechtsanwälte**

Dr. jur. Hans Krieger (LG)
Dr. jur. H. Jochen Krieger (OLG)
Dr. jur. Wolfgang Pinder (LG)
Dagmar Petry (LG)
— Fach LG 153 —

**KRIEGER & PARTNER**

Postfach 68 08

4000 Düsseldorf 1

Büro: Gogrevestraße 11–13
Telefon: (02 11) 31 20 71
Telex: 8 587 428 ttkr
Mailbox: GEO1:RAE–HGP
Kabel: Jurk Düsseldorf
Dresdner Bank, D'dorf Nr. 2 104 167
Kreissparkasse D'dorf Nr. 1 046 373
Postgiro: Essen Nr. 4417 51-439

**0245589**

<u>Beschreibung der Patentanmeldung</u>
<u>Verfahren zur Herstellung von Kunststoffmantel-</u>
<u>rohrsystemen mit Stahlmantelbogen</u>

Die Erfindung bezieht sich auf ein Verfahren zur Herstellung von Rohrleitungssystemen für heiße Medien unter Verwendung von Kunststoffmantelrohren, die dadurch gekennzeichnet ist, daß alle Richtungsänderungen rechtwinkelig oder doch nahezu rechtwinklig sind und daß der Außenmantel in diesem Bereich aus einem Stahlmantel besteht, auf den die Restdehnungskräfte übertragen und an das nach der Verlegung verdichtete Erdreich abgegeben werden.

Bei Rohrsystemen für heiße Medien treten nach Inbetriebnahme durch die Erwärmung des Mediumrohres gewaltige Ausdehnungs- und Spannungskräfte auf, die erhebliche technische Schwierigkeiten verursachen.

Nach dem herkömmlichen Stande der Technik werden diese Kräfte teilweise dadurch aufgefangen, daß die Rohrleitungssysteme so tief im Erdreich verlegt werden, daß die Erdreibungskräfte einen Teil dieser Bewegung auffangen.

Die Reibungskräfte addieren sich mit der Rohrlänge und können bei großen Leitungslängen sogar so groß werden, daß die Bewegung der Rohrleitung im mittleren Haftbereich völlig unterdrückt werden.

0245589

Blatt 2 zur Patentanmeldung vom 17.02.1987

Es verbleibt aber ein Gleitbereich an den jeweiligen Enden. Hier tritt nach wie vor eine Bewegung des Rohres auf mit erheblichen und unkontrollierbaren Gefahren, namentlich dort, wo Rohrstücke mit Muffen verbunden sind. Nach dem herkömmlichen Stande der Technik werden diese Dehnungs- und Spannungskräfte zwar dadurch vermindert, daß die Rohre vor dem Einerden vorgespannt, d. h. daß sie auf ca. 50 °C der Betriebstemperatur gebracht werden bevor der Graben zugeschüttet wird.

Auch bei diesem Verfahren verbleiben jedoch Restdehnungskräfte, namentlich im Gleitbereich. Hier müssen ausreichende Möglichkeiten zur Aufnahme der sich ergebenden radialen Bewegungen des Rohrsystemes vorgesehen werden. Hierzu werden verschiedenartige Dehnungspolster angewendet. Die eingebauten Materialien müssen manigfache Anforderungen erfüllen, namentlich ein genügendes Rückstellverhalten, Unverrottbarkeit, genügende Druckfestigkeit, Sicherheit gegen Verschlammung, sowie Nagetiersicherheit. Diese Dehnungselemente müssen so an der Rohrleitung befestigt werden, daß ein Verrutschen bei den Verfüllarbeiten nicht möglich ist. Bei der Dimensionierung der Dehnungszonen muß schließlich darauf geachtet werden, daß die PE-Manteltemperatur 50 °C nicht übersteigt.

Derartig verlegte Rohrsysteme, auch mit Vorspannung, sind aber auch dadurch gekennzeichnet, daß dieses Verfahren manigfachen Unwägbarkeiten unterliegt, so ist praktisch nicht kontrollierbar, wo der Haftbereich in den Gleitbereich übergeht und ob die Dehnungspolster ihre Funktion noch erfüllen und/oder ob Muffen nicht so bewegt wurden, daß hereingepreßte Partikel die Funkton beeinträchtigen.

**Rechtsanwälte**

Dr. jur. Hans Krieger (LG)
Dr jur. H. Jochen Krieger (OLG)
Dr. jur. Wolfgang Pinder (LG)
Dagmar Petry (LG)
— Fach LG 153 —

**KRIEGER & PARTNER**

Postfach. 68 C8

4000 Düsseldorf 1

Büro: Gogrevestraße 11–13
Telefon: (02 11) 31 20 71
Telex: 8 587 428 ttkr
Mailbox: GEO1:R 0245589 PP
Kabel: Jurk Düsseldorf
Dresdner Bank, D'dorf Nr. 2 104 167
Kreissparkasse D'dorf Nr. 1 046 373
Postgiro: Essen Nr. 4417 51-439

3

Blatt 3 zur Patentanmeldung vom 17.02.1987

Aufgabe dieser Erfindung ist es, daß bisher praktizierte Verlegungsverfahren dahingehend zu verbessern, daß die Spannungskräfte des Mediumrohres auf einen Stahlmantelbogen geführt werden, der seinerseits wieder fest in verdichtetes Erdreich gebettet wird und die Restdehnungskräfte als Fixpunkt aufnimmt. Dadurch werden die Bewegungen des Rohrsystemes auf eine Minimum reduziert.

Dieses Verfahren hat darüberhinaus manigfache Vorteile; einmal werden alle mit den Dehnungspolstern verbundenen Risikofaktoren ausgeschaltet; ausgeschaltet werden ferner alle Risikofaktoren, die durch die Bewegung im Erdreich gegeben sind. Die Erdreibungskräfte, die einen Teil dieser Bewegungen nach dem herkömmlichen Stande der Technik ausschalten sollen, werden nicht mehr benötigt. Die Leitungen können also flach verlegt werden. Dies bedeutet beträchtliche Einsparungen bei den Verlegungskosten.

Abbildung (1) stellt einen erfindungsgemäß erstellten und in das Rohrleitungssystem einzubauenden Stahlmantelbogen dar, wobei ein Kräfteübertragungsring (11) bei Temperaturen bis zu 80 °C ausreicht, während bei Temperaturen über 80 °C eine Kombination von Rohrstücken und Scheiben sowie Isolierelementen gemäß Bezugsziffern (6), (8), (7), sowie Isolierelementen (9 a) und (9 b) erforderlich ist. Es ist ferner eine Vorspannung mit 50 % der Betriebstemperatur bei der Leitung empfehlenswert. Bei Temperaturen über 140 °C werden auch die Stahlmantelbogen werkseitig mit 50 % der Betriebstemperatur vorgespannt.

**Rechtsanwälte**

Dr. jur. Hans Krieger (LG)
Dr jur. H. Jochen Krieger (OLG)
Dr. jur. Wolfgang Pinder (LG)
Dagmar Petry (LG)
— Fach LG 153 —

**KRIEGER & PARTNER**

Postfach 68 08

4000 Düsseldorf 1

Büro: Gogrevestraße 11–13
Telefnr: (02 11) 31 20 71
Telex: 8 587 428 ttkr
Mailbox: GEO1:...
Kabel: Jurk Düsseldorf
Dresdner Bank, D'dorf Nr. 2 104 167
Kreissparkasse D'dorf Nr. 1 046 373
Postgiro: Essen Nr. 4417 51-439

0245589

Blatt 4 zur Patentanmeldung vom 17.02.1987

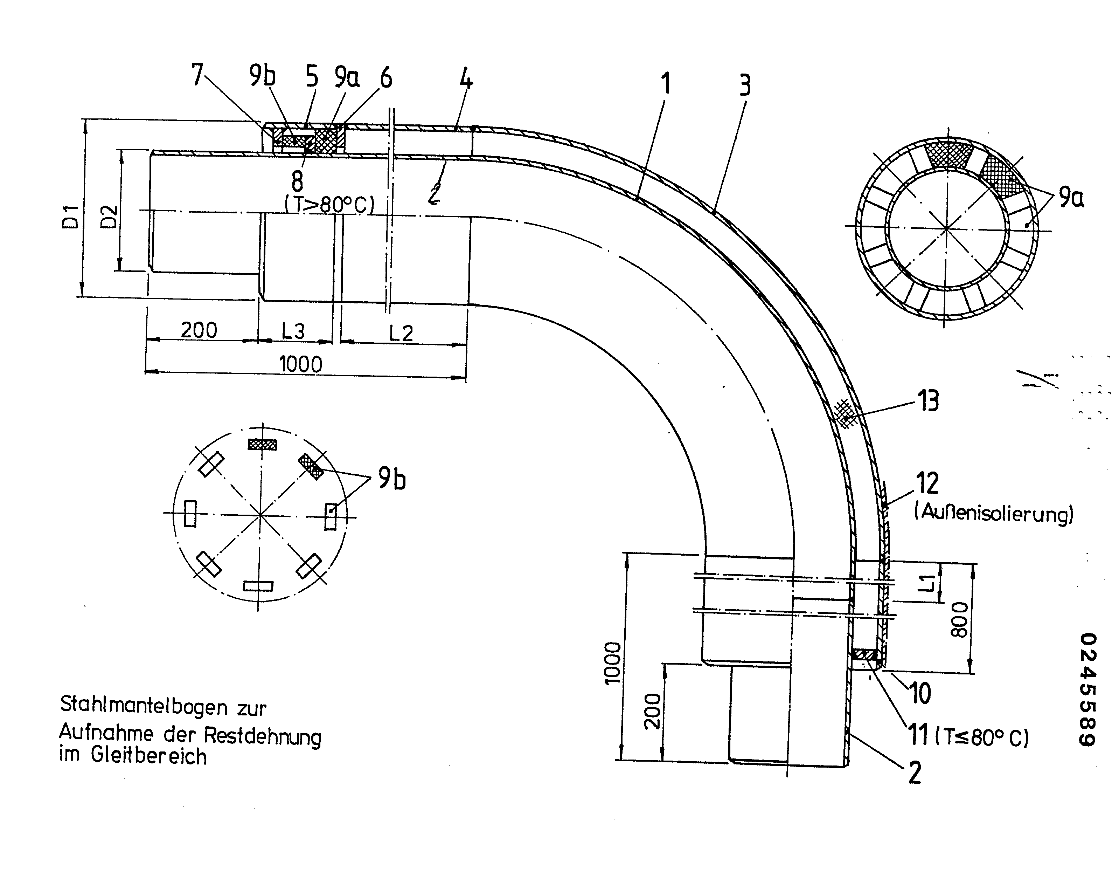

Im folgenden wird die Erfindung anhand der lediglich einen Ausführungsweg darstellenden Zeichnung dargestellt, wobei die Zeichnung einen fertig montierten Stahlmantelbogen darstellt. Eine Abbildung 2 mit den Einzelstücken vor Zusammenbau wird nachgereicht.

Ein um 90 °C gebogenes Mediumstahlrohrstück (1) wird in einen kunststoffisolierten Stahlmantelbogen (3) mit angepaßtem Radius gesteckt. Zwischen Außenradius des Mediumrohrbogens und dem Innenradius des äußeren Stahlmantelbogens wird eine Isolierung (13) eingebracht und der Außenstahlmantelbogen mit einer äußeren Schutzschicht (12) versehen. Danach wird das Mediumstahlrohrstück (2) an das gebogene Mediumstahlrohrbogenstück (1) geschweißt, ein Stahlmantelrohrstück (4) mit der Scheibe (6), sowie das Stahlmantelrohrstück (5) mit der Scheibe (7) zusammengeschweißt. Dann erfolgt eine Verschweißung des Stahlmantelrohrstückes (4) mit dem Stahlmantelbogenstück (3), als dann wird die Scheibe (8) auf das Mediumstahlrohrbogenstück (11) geschweißt und die thermischen Isolierelemente (9 a) und die Isolierplatten (9 b) eingesetzt. Als letztes wird das Mantelrohr (5) mit der Scheibe (6) zusammengeschweißt.

Hierdurch erfolgt eine Übertragung der Mediumrohrdehnungskräfte auf den Stahlmantelbogen bei gleichzeitiger Abisolierung der Wärme des Mediumrohres von dem Stahlmantelbogen.

Bei Temperaturen kleiner als 80 °C sind zusätzliche Isoliermaßnahmen nicht erforderlich, so daß eine Übertragungsringscheibe (11) zur Übertragung der Kräfte genügt.

Dr. jur. Hans Krieger (LG)
Dr jur H. Jochen Krieger (OLG)
Dr. jur. Wolfgang Pinder (LG)
Dagmar Petry (LG)
— Fach LG 153 —

Postfach 68 C8

4000 Düsseldorf 1

Telefon: (02 11) 31 20 71
Telex: 8 587 428 ttkr
Mailbox: GEO1:R
Kabel: Jurk Düsseldorf
Dresdner Bank, D'dorf Nr. 2 104 167
Kreissparkasse D'dorf Nr. 1 046 373
Postgiro: Essen Nr. 4417 51-439

0245589

Blatt 5 zur Patentanmeldung vom 17.02.1987

Bei Temperaturen größer als 80 °C, aber kleiner als 140 °C ist eine Vorspannung der Rohrleitung je nach Länge empfehlenswert, eine werkseitige Vorspannung des Stahlmantelrohrbogens aber nicht erforderlich. Diese empfiehlt sich erst bei Temperaturen über 140 °C. Eine solche Vorspannung erfolgt erfindungsgemäß dadurch, daß das Mediumrohrstück (1) vor der Verschweißung der Mantelrohrstücke (3) und (4) auf 50 % der Betriebstemperatur vorgeheizt wird.

**Rechtsanwälte**

Dr. jur. Hans Krieger (LG)
Dr. jur. H. Jochen Krieger (OLG)
Dr. jur. Wolfgang Pinder (LG)
Dagmar Petry (LG)
— Fach LG 153 —

KRIEGER & PARTNER

Postfach 68 08

4000 Düsseldorf 1

Büro: Gogrevestraße 11–13
Telefon: (02 11) 31 20 71
Telex: 8 587 428 ttk
Mailbox: GEO1:RAL-KFF
Kabel: Jerk Düsseldorf
Dresdner Bank, D'dorf Nr. 2 104 167
Kreissparkasse D'dorf Nr. 1 046 373
Postgiro: Essen Nr. 4417 51–439

0245589

## P a t e n t a n s p r ü c h e

1. Verfahren zur Herstellung von Rohrleitungen für heiße Medien und unterirdische Verlegung, vorzugsweise Fernwärmeleitungen, gekennzeichnet dadurch, daß alle Richtungsänderungen des Leitungssystems rechtwinklig oder doch nahezu rechtwinklig sind und das Mediumrohrbogenstück in einen Stahlmantelaußenbogen am Beginn und am Ende der Richtungsänderung dergestalt eingebaut ist, daß die Restdehnungskräfte über den Stahlmantelaußenbogen auf das nach Verlegung verdichtete Erdreich übertragen werden.

2. Verfahren gem. Anspruch 1. zur Herstellungen von Rohrleitungen für bis zu 80 °C heiße Medien, dadurch gekennzeichnet, daß die Restdehnungskräfte durch die Scheibe (11) vom Mediumstahlrohr auf den äußeren Stahlmantelbogen übertragen werden.

3. Verfahren nach Anspruch 1. für Medien heißer als 80 °C, dadurch gekennzeichnet, daß die Restdehnungskräfte durch die Scheiben (6), (7) und (8) über die thermischen Isoliersegmente (9 a) und Isolierplatten (9 b) vom Mediummantelrohr auf den äußeren Stahlmantelbogen übertragen werden.

4. Verfahren nach Anspruch 3. für Betriebstemperaturen über 140 °C, dadurch gekennzeichnet, daß Stahlmantelbogen verwandt werden, deren Mediumrohr werkseitig zwischen den Schweißnähten (4) und (3) durch Erwärmen auf 50 % der Betriebstemperatur und die Rohrleitung vor Ort mit 50 % der Betriebstemperatur vorgespannt wird.

**Rechtsanwälte**

Dr. jur. Hans Krieger (LG)
Dr. jur. H. Jochen Krieger (OLG)
Dr. jur. Wolfgang Pinder (LG)
Dagmar Petry (LG)
— Fach LG 153 —

**KRIEGER & PARTNER**

Postfach 58 08

4000 Düsseldorf 1

Büro: Gögrevestraße 11–13
Telefon: (02 11) 31 20 71
Telex: 8 587 428 ttk
Mailbox: GEO1:RAE-KPP
Kabel: Jurk Düsseldorf
Dresdner Bank, D'dorf Nr. 2 104 167
Kreissparkasse D'dorf Nr. 1 046 373
Postgiro: Essen Nr. 4417 51-439

**0245589**

- 2 -

5. Verfahren zur Herstellung von Stahlmantelbogen für Rohrleitungen gem. Anspruch 1., dadurch gekennzeichnet, daß die Restdehnungskräfte durch die Scheibe (11) vom Mediumstahlrohr auf den äußeren Stahlmantelbogen übertragen werden.

6. Verfahren zur Herstellung von Stahlmantelbogen zur Aufnahme von Dehnungskräften von Rohrleitungen für mehr als 80 °C heiße Medien, vorzugsweise Fernwärmeleitungen, dadurch gekennzeichnet, daß ein vorzugsweise um ca. 90 °C gebogenes Mediumstahlrohrstück (1) in einen kunststoffisolierten Stahlmantelbogen (3) mit angepaßtem Radius gesteckt, danach auf der einen Seite, das Mediumstahlrohr (2) an das gebogene Mediumstahlrohrbogenstück (1) geschweißt, das Stahlmantelrohr (4) mit der Scheibe (6), sowie das Stahlmantelrohrstück (5) mit der Scheibe (7) zusammengeschweißt, dann das Stahlmantelrohr (4) mit dem Stahlmantelbogenstück (3) zusammengeschweißt, dann die Scheibe (8) auf das Mediumstahlrohrbogenstück (1), sodann die thermischen Isoliersegmente (9 a) und die Isolierplatten (9 b) eingesetzt und als letztes auf dieser Seite das Mantelrohr (5) mit der Scheibe (6) zusammengeschweißt wird.

7. Verfahren nach Anspruch 6. für Stahlmantelbogenstücke, für eine Betriebstemperatur größer als 140 °C, dadurch gekennzeichnet, daß vor der Verschweißung eine Vorspannung von 50 % der Betriebstemperatur wie bei Anspruch 4. erfolgt.

8. Stahlmantelbogenstücke für Rohrleitungen für heiße Medien und unterirdische Verlegung, vorzugsweise Fernwärmeleitungen, dadurch gekennzeichnet, daß sie gemäß den Ansprüchen 5, 6 und 7 hergestellt sind.